# EUROPEAN PATENT SPECIFICATION

(11) **EP 2 902 544 B1**
(45) Date of publication and mention of the grant of the patent: **10.05.2017**
(21) Application number: 14000349.2
(22) Date of filing: 30.01.2014
(51) Int. Cl.: D21C 9/10, D21H 19/44

(54) **Aqueous composition comprising a polyvalent metal complexed by carbonate and carboxylic acid ligands, and use thereof**
Wässrige Zusammensetzung mit einem mit Carbonat und Carboxylsäure komplexierten polyvalenten Metall und Verwendung dafür
Composition aqueuse comprenant un métal polyvalent complexé par carbonate et ligands d'acide carboxylique et son utilisation

(43) Date of publication of application: 05.08.2015
(73) Proprietor: Archroma France SAS, 60350 Trosly-Breuil (FR)
(72) Inventor: Corpet, Damien Julien, 71380 Oslon (FR); Letoffet Cabello Rodriguez, Christine Jeannine, 02600 Dommiers (FR); Berdon, Virginie Angèle Georgette, F-60350 Trosly-Breuil (FR)
(74) Representative: Ricker, Mathias

(56) References cited:
- EP-A1- 0 069 718
- WO-A1-99/06478
- WO-A1-99/58574
- WO-A1-2008/086604
- WO-A2-95/02086
- AU-A- 2 344 667
- US-A- 3 740 366
- US-A- 5 786 313
- US-A1- 2009 317 549

## Description

The present invention relates to an aqueous composition comprising a complex of a polyvalent metal complexed by at least one carbonate ligand and at least one carboxylic acid ligand, and to the use of said composition as insolubilizing agent in coating baths for the treatment of fiber-based substrates, like paper, board, non woven and textiles.

US 4,350,788 teaches that zinc oxide pigments can be used to crosslink adhesive polymers. It is known that zinc oxide pigments can be used to render insoluble, in aqueous solution, synthetic binders, such as latexes or polyvinyl alcohol, and to form insoluble films, thus improving the resistance to water, to friction, to heat and to solvents.

However, as the zinc oxide pigment, in its solid form, provides only a limited reactive surface, the use of these powders has the disadvantage of providing only very limited efficiency. Thus, the use of these pigments does not give satisfactory results, particularly as regards the resistance of the coating to wet rub.

US 3,740,366 and EP 0 182 628 teach that aqueous polyvalent metal complexes, like zinc diglycinate (ZDG), can be used to render insoluble, in aqueous solution, synthetic binders, such as latexes or polyvinyl alcohol, and to form insoluble films, thus improving the resistance to water, to friction, to heat and to solvents.

These polyvalent metal diglycinate solutions are used in numerous technological fields, in particular in aqueous ink and paint formulations and possibly in coating baths intended for the coating or impregnation of paper or board in order to improve the appearance, the wet abrasion resistance, the picking, the strength and the ability to receive printing.

However, the use of these solutions has the disadvantage of providing only very limited efficiency. Thus, the use of these compositions does not give satisfactory results, particularly as regards the resistance of the coating to wet rub.

WO 99/06478 teaches that polyvalent metal complexes, such as zinc diacetate (ZDA) solutions, can be used to crosslink polymers. It is known that aqueous compositions of these complexes can be used to render insoluble, in aqueous solution, synthetic binders, such as latexes or polyvinyl alcohol, and to form insoluble films, thus improving the resistance to water, to friction, to heat and to solvents. In WO 99/06478 it is described that these aqueous compositions comprising a polyvalent metal complex, like zinc diacetate, are used in aqueous polymer dispersions.

US 2009/317549 A relates to a composition comprising a water-soluble salt of a divalent metal, a complexing agent for the divalent metal and an optical brightener.

However, these compositions are not used in pigmented coating baths intended for the coating or impregnation of paper or board, as the use of these compositions has the disadvantage of showing strong incompatibilities with standard pigmented coating baths of paper and textile industries. This incompatibility results in the destabilization of common coating baths and strong increases of viscosity, rendering the coating baths unusable for application.

It was therefore an object of the present invention to provide novel aqueous compositions of polyvalent metals in complexed form to be used in the textile and/or paper industry, in particular compositions being compatible with standard pigmented coating baths and providing coatings with an improved resistance to wet rub.

This object is solved by the aqueous composition according to claim 1.

Embodiments of the aqueous composition according to the invention are subject-matter of the thereon dependent claims.

### SUMMARY OF THE INVENTION

Surprisingly, it has been found that an aqueous composition comprising a complex comprising at least one polyvalent metal wherein the at least one polyvalent metal is complexed by at least one carbonate ligand and at least one carboxylic acid ligand, characterized in that the at least one carbonate ligand is selected from sodium hydrogencarbonate, ammonium carbonate, ammonium hydrogencarbonate, potassium hydrogencarbonate, and combinations or mixtures thereof and the at least one carboxylic acid ligand is selected from glycolic acid, lactic acid, qlvcine and combinations thereof, makes it possible to obtain satisfactory resistances to wet rub, while maintaining complete compatibility with standard pigmented coating baths.

Thus, in a first aspect the present invention relates to an aqueous composition comprising a complex comprising at least one polyvalent metal, wherein the at least one polyvalent metal is complexed by at least one carbonate ligand and at least one carboxylic acid ligand, wherein the at least one carbonate ligand is selected from sodium hydrogencarbonate, ammonium carbonate, ammonium hydrogencarbonate, potassium hydrogencarbonate, and combinations or mixtures thereof and the at least one carboxylic acid ligand is selected from glycolic acid, lactic acid, glycine and combinations thereof.

In a particular embodiment, the at least one polyvalent metal is selected from transition metals and main group metals. Preferably, the at least one polyvalent metal is zinc or aluminum.

In a particular embodiment, the source of the at least one polyvalent metal is selected from the corresponding metal carbonate, metal chloride, metal oxide, metal sulphate, and mixtures or combinations thereof.

Preferably, the source of the at least one polyvalent metal is selected from zinc carbonate, zinc chloride (ZnCl₂), zinc oxide, zinc sulphate, aluminum chloride, aluminum oxide, aluminum sulphate, and mixtures and combinations thereof.

In a particular embodiment, the molar ratio between the at least one carbonate ligand and the at least one carboxylic acid ligand is at least about 10 molar %, preferably at least about 20 molar %, even more preferably at least about 30 molar %, and up to about 65 molar %, preferably up to about 60 molar %, even more preferably up to about 50 molar %, most preferably between about 30 and about 50 molar % of carbonate ligand; and at least about 35 molar %, preferably at least about 40 molar %, even more preferably at least about 50 molar %, and up to about 90 molar %, preferably up to about 80 molar %, and most preferably up to about 70 molar %, most preferably between about 50 and about 70 molar % of carboxylic acid ligand, wherein the amount of carboxylic acid ligand and carbonate ligand is in total 100 molar %.

In a particular embodiment, the source of the at least one carbonate ligand is selected from an inorganic carbonate salt, e.g. the source of the at least one carbonate ligand is selected from sodium hydrogenocarbonate, ammonium carbonate, ammonium hydrogenecarbonate, potassium hydrogenocarbonate, and combinations or mixtures thereof.

In a particular embodiment, the source of the at least one polyvalent metal is selected from zinc oxide, zinc carbonate, and combinations or mixtures thereof; and the source of the at least one carbonate ligand is selected from potassium hydrogenocarbonate, ammonium hydrogenecarbonate, and combinations or mixtures thereof; and the source of the at least one carboxylic acid ligand is selected from glycolic acid, lactic acid, glycine, and combinations or mixtures thereof.

In a particular embodiment, the pH value of the composition is alkaline. Preferably, the pH value of the composition is more than 7, or more than about 8, or more than about 9, and less than about 10.

In a particular embodiment, the concentration of Zn or Al ions, expressed as ZnO or Al₂O₃, is in the range of from about 3 to about 20% by weight.

In a particular embodiment, the composition further comprises at least one additive. Preferably, said at least one additive is selected from the group consisting of stabilizing agents.

In another aspect, the present invention relates to a method of manufacturing of the composition as disclosed herein, which comprises the admixing of at least one salt of a polyvalent metal and with at least one carbonate salt and at least one carboxylic acid, wherein the at least one carbonate salt is selected from sodium hydrogencarbonate, ammonium carbonate, ammonium hydrogencarbonate, potassium hydrogencarbonate, and combinations or mixtures thereof and the at least one carboxylic acid is selected from glycolic acid, lactic acid, glycine and combinations or mixtures thereof.

In yet another aspect, the present invention relates to a method of coating a fiber-based substrate, e.g. a cellulose-based substrate, such as a paper, board, non woven or textile substrate, comprising the step of contacting said substrate with the composition as disclosed herein.

In yet another aspect, the present application relates to the use of the composition as disclosed herein as an insolubilizing agent in an aqueous composition for the treatment, e.g. impregnation or coating, of a fiber-based substrate, e.g. a cellulose-based substrate, such as paper, board, non woven or textile material.

In yet another aspect, the present invention relates to a pigmented coating bath comprising the composition as disclosed herein.

### DETAILED DESCRIPTION OF THE INVENTION

Thus, in a first aspect, the present invention relates to an aqueous composition comprising a complex comprising at least one polyvalent metal, wherein the at least one polyvalent metal is complexed by at least one carbonate ligand and at least one carboxylic acid ligand.

The term "complex" as used herein comprises at least one polyvalent metal which is complexed by at least two ligands.

The complex according to the subject application comprises at least one polyvalent metal which is complexed by at least one carbonate ligand and at least one carboxylic acid ligand.

Carbonates to be used within the ambit of the subject application are sodium hydrogenecarbonate, ammonium carbonate, ammonium hydrogenocarbonate or potassium hydrogenocarbonate, or a mix of such compounds; potassium and ammonium hydrogenocarbonate being preferred.

The carboxylic acid ligand is derived from a monocarboxylic acid ligand comprising glycolic acid, lactic acid and glycine.

In the context of the present invention, the term "polyvalent metal" relates to a metal being at least bivalent. The metal may be present in the complex in atomic or ionic form. In one embodiment the metal is present in ionic form.

In a particular embodiment, the at least one polyvalent metal is selected from transition metals and main group metals according to the PSE (periodic system of the elements). In one embodiment, the at least one polyvalent metal is zinc or aluminum.

In a particular embodiment, the source of the at least one polyvalent metal is selected from the corresponding metal carbonate, metal chloride, metal oxide, metal sulphate, and mixtures or combinations thereof.

Preferably, the source of the at least one polyvalent metal is selected from zinc carbonate, zinc chloride (ZnCl₂), zinc oxide, zinc sulphate, aluminum chloride, aluminum oxide, aluminum sulphate, and mixtures and combinations thereof.

The zinc carbonate, zinc chloride (ZnCl₂), zinc oxide, and zinc sulphate which can be used according to the invention are commercial products generally available in the solid form.

Typically, the compositions of the present invention are prepared by reaction of the zinc compound with an aqueous solution of a carbonate and a carboxylic acid. The reaction of the zinc compound with the said carbonate and said carboxylic acid can be carried out at ambient temperature or by heating.

According to a preferred embodiment, after having added, at ambient temperature, the zinc compound to the aqueous solution of said carbonate and said carboxylic acid, the solution obtained is brought with stirring to a temperature of between 30 and 80°C, preferably to 70°C, for 1 h to 24 h, prefera 7 24 h.

In a particular embodiment, the molar ratio between the at least one carbonate ligand and the at least one carboxylic acid ligand is at least about 10 molar %, preferably at least about 20 molar %, even more preferably at least about 30 molar %, and up to about 65 molar %, preferably up to about 60 molar %, even more preferably up to about 50 molar %, most preferably between about 30 and about 50 molar % of carbonate ligand; and at least about 35 molar %, preferably at least about 40 molar %, even more preferably at least about 50 molar %, and up to about 90 molar %, preferably up to about 80 molar %, and most preferably up to about 70 molar %, most preferably between about 50 and about 70 molar % of carboxylic acid ligand, wherein the amount of carboxylic acid ligand and carbonate ligand is in total 100 molar %.

The source of the at least one carbonate ligand is selected from an inorganic carbonate salt. Preferably, the source of the at least one carbonate ligand is selected from sodium hydrogenocarbonate, ammonium carbonate, ammonium hydrogenocarbonate, potassium hydrogenocarbonate, and combinations or mixtures thereof.

The source of the at least one carboxylic acid ligand is selected from glycolic acid, lactic acid, glycine, and combinations or mixtures thereof.

In a particular embodiment, the source of the at least one polyvalent metal is selected from zinc oxide, zinc carbonate, and combinations or mixtures thereof; and the source of the at least one carbonate ligand is selected from potassium hydrogenocarbonate, ammonium hydrogenocarbonate, and combinations or mixtures thereof; and the source of the at least one carboxylic acid ligand is selected from glycolic acid, lactic acid, glycine, and combinations or mixtures thereof.

In a particular embodiment, the pH value of the composition is alkaline. Preferably, the pH value of the composition is more than 7, or more than about 8, or more than about 9, and less than about 10.

In a particular embodiment, the concentration, expressed as ZnO or Al₂O₃, is in the range of from about 3 to about 20% by weight. This ratio and the way of determining same, i.e. in the form of the respective oxide, also applies to all other polyvalent metal complexes falling within the ambit of the subject application.

In a particular embodiment, the composition further comprises at least one additive. Preferably, said at least one additive is selected from the group consisting of stabilizing agents.

The stability of the aqueous compositions of the present invention can be improved by the addition of a stabilizing agent as described in the state of the art. In one embodiment, the stabilizing agent is selected from polyacids, such as tartaric acid. The stabilizing agent is advantageously added in the proportion of 1 to 2% approximately with respect to the weight of the final solution. The stabilizing agent may be added before the reaction between the zinc compound and the carbonate or after, preferably before the reaction. In one embodiment, the aqueous composition comprises a stabilizing agent selected from polycarboxylic acids and a complex comprising a polyvalent metal complexed by a carbonate ligand and a monocarboxylic acid ligand functionalized with at least one further hydrophilic group. Preferably, the polycarboxylic acid is present as free acid in the composition.

In another aspect, the present invention relates to a method of manufacturing of the composition as disclosed herein comprising the admixing of at least one salt of a polyvalent metal with at least one carbonate salt and at least one carboxylic acid, wherein the at least one carbonate salt is selected from sodium hydrogencarbonate, ammonium carbonate, ammonium hydrogencarbonate, potassium hydrogencarbonate, and combinations or mixtures thereof and the at least one carboxylic acid is selected from glycolic acid, lactic acid, glycine and combinations or mixtures thereof..

The compositions obtained according to the invention are stable over time and exhibit advantageous properties when they are introduced into compositions for the treatment of fiber-based products, in particular cellulose-based products, and in particular into pigmented coating baths.

They make it possible in particular to improve the wet abrasion resistance, the wet pick resistance and the inertia with regard to water of the substrates treated, such as fiber based substrates, such as non woven, textiles, paper or board; such as, for example, paper of the type for the printing of writing, newsprint, recycled paper, wrapping paper, paper of test liner type, the backing for self-adhesive labels or board in the flat.

Thus, in another aspect, the present invention relates to a method of coating a fiber-based substrate, e.g. a cellulose-based substrate, such as a paper, board, non woven or textile substrate, comprising the step of contacting said substrate with the composition as disclosed herein.

In yet another aspect, the present invention relates to the use of the composition according to the invention as insolubilizing agent in an aqueous composition for the treatment, e.g. impregnation or coating, of a fiber-based substrate, e.g. a cellulose-based substrate, such as paper, board, non woven or textile material.

In yet another aspect, the present invention relates to a pigmented coating bath comprising the composition disclosed herein. Preferably, said coating bath is for the impregnation or coating of paper, board, non woven or textile.

In a particular embodiment, the fiber-based substrate is a cellulose-based product.

In a particular embodiment, the cellulose-based product is selected from paper and board.

In a particular embodiment, the fiber-based product is selected from non woven and textiles.

In the context of the present invention, the term "coating bath" relates to an aqueous mixture comprising at least one binder, an insolubilizing agent and a pigment, and also, optionally, functional additives. Generally, the pigments used are chosen from kaolin, calcium carbonate, titanium dioxide and their mixtures. Other pigments, such as alumina hydrate, satin white, silicates or synthetic pigments, can also be used for specific applications.

In the context of the present invention, the term "insolubilizing agent" refers to a composition able to crosslink the at least one binder comprised in a coating bath, thereby rendering it more hydrophobic. An insolubilizing agent functions to improve the surface characteristics of fiber-based products treated with a coating bath comprising said insolubilizing agent, in particular to improve the wet abrasion resistance of said fiber-based product.

According to a preferred embodiment of implementing the invention, the insolubilizing agent is a zinc based aqueous composition comprising a potassium and / or ammonium hydrogenocarbonate and glycolic acid and / or glycine.

In the present invention, the coating bath can be:
- either deposited at the surface over the fiber-based product in one or more layers while limiting the penetration inside the surface to be treated, an operation commonly known as coating;
- or brought into contact with the fiber-based product with the objective of obtaining penetration inside the fiber-based product in one or more stages, an operation commonly known as impregnation.

The binders can be of natural or synthetic origin.

Mention may be made, among natural binders, of starch, modified starch (for example oxidized or modified by enzymes), soy protein and casein.

More commonly, use is made of synthetic binders, such as styrene/butadiene latexes, polyvinyl acetate latexes, styrene/acrylate and acrylate latexes or polyvinyl alcohol.

According to a preferred aspect, the binders used in the present invention can be chosen from functionally modified latexes, for example latexes modified with hydroxyl groups, particularly with carboxyl groups, in particular sodium carboxylate groups. Mention may be made, by way of example, of the styrene/butadiene DL 950 latex sold by Dow.

The coating baths which can be used in the present invention can also comprise additives, such as dispersants, viscosity modifiers (carboxymethylcellulose or hydroxyethylcellulose, for example), lubricating agents, bactericides, pH control agents, repellents, gloss agents, dyes or antifoaming agents.

The pH of the said coating baths is generally between 7 and 9, preferably between 7 and 8.7.

Generally, the amount of insolubilizing agent of the present invention in the coating bath is between 1 and 20 parts as is per 100 parts of binder under dry conditions, preferably between 3 and 15 parts as is per 100 parts of binder under dry conditions.

The coating bath is applied by methods known to the person skilled in the art. Mention may be made, by way of example, of the process with an applicator roll, size press or premetering size press.

In another aspect, the present invention relates to a method for treating a fiber-based substrate, preferably paper, board, non woven or textiles, preferable a cellulose-based product, in which a coating bath comprising at least one binder, an insolubilizing agent and a pigment, is applied at the surface of the said fiber-based product, characterized in that the insolubilizing agent is an aqueous composition comprising a complex comprising at least one polyvalent metal, wherein said at least one polyvalent metal is complexed by at least one carbonate ligand and at least one carboxylic acid ligand, as described above. Preferably, said insolubilizing agent is a zinc based aqueous composition comprising a carbonate and a carboxylic acid.

In another aspect, the present invention relates to at a method for treating a fiber-based substrate, like a cellulose-based product, preferably paper or board, non woven or textiles, in which a coating bath comprising at least one binder, an insolubilizing agent and optionally a pigment is brought into contact with said fiber-based product, characterized in that that the insolubilizing agent is an aqueous composition comprising at least one polyvalent metal, wherein said at least one polyvalent metal is complexed by at least one carbonate ligand and at least one carboxylic acid ligand, as described above. Preferably, said insolubilizing agent is a zinc based aqueous composition comprising a carbonate and a carboxylic acid, as described above.

The invention is illustrated without implied limitation by the following examples.

### COMPARATIVE EXAMPLE 1

Use of commercial Zinc oxide nanodispersion, containing 40 % of dry ZnO, nanodispersed in water

### COMPARATIVE EXAMPLE 2

Preparation of an ammonium zinc dicarbonate comprising 13 % of dry ZnO with regard to the solution as is and 2 mol of carbonate per mole of zinc.

61.7 g of water are put under stirring, at ambient temperature. Subsequently, 25.3 g of ammonium bicarbonate are added, followed by 13.0 g of zinc oxide (purity about 97 %). When the addition is complete, the pH of this suspension is adjusted to basic pH with ammonia and then the solution is heated at 77°C for 4 hours.

The solution is then cooled to 30°C.

100 g of a clear colourless solution having a strong smell of ammonia are obtained.

### COMPARATIVE EXAMPLE 3

Preparation of a zinc diacetate comprising 10 % of dry ZnO with regard to the solution as is and 2 mol of acetic acid per mole of zinc.

79.9 g of water are put under stirring, at ambient temperature. Subsequently, 20.1 g of commercial zinc diacetate are added. When the addition is complete, the suspension is stirred until complete dissolution.

100 g of a clear colourless solution are obtained.

### COMPARATIVE EXAMPLE 4

Preparation of a zinc diglycinate comprising 15 % of dry ZnO with regard to the solution as is and 2 mol of glycine per mole of zinc.

61.9 g of water are put under stirring, at ambient temperature. Subsequently, 38.1 g of commercial zinc diglycinate are added. When the addition is complete, the pH is adjusted to basic pH with ammonia and then the suspension is stirred until complete dissolution.

100 g of a clear colourless solution are obtained.

### EXAMPLE 5

Preparation of a zinc solution containing both ammonium hydrogenocarbonate and glycinate, with a 50:50 molar ratio of ammonium hydrogenocarbonate and glycinate, and comprising 15 % of dry ZnO with regard to the solution as is. 1 mol of carbonate and 1 mol of glycine per mole of zinc were used.

54.8 g of water are put under stirring, at ambient temperature. Subsequently, 14.4 g of glycine are added, followed by 15.6 g of zinc oxide (purity about 97%), followed by 15.2 g of ammonium hydrogenocarbonate. When the addition is complete, the pH of this suspension is adjusted to basic pH with ammonia and then the solution is heated at 78°C for 2 hours.

The solution is then cooled to 30°C.

100 g of a clear colourless solution are obtained.

### EXAMPLE 6

Preparation of a zinc solution containing both ammonium hydrogenocarbonate and glycinate, with molar ratio of 40 % of ammonium hydrogenocarbonate and 60 % of glycinate, and comprising 15 % of dry ZnO with regard to the solution as is and, so 0.8 mol of carbonate and 1.2 mol of glycine per mole of zinc.

55 g of water are put under stirring, at ambient temperature. Subsequently, 17.2 g of glycine are added, followed by 15.6 g of zinc oxide (purity about 97%), followed by 12.2 g of ammonium hydrogenocarbonate. When the addition is complete, the pH of this suspension is adjusted to basic pH with ammonia and then the solution is heated at 70°C for 5 hours.

The solution is then cooled to 30°C.

100 g of a clear colourless solution are obtained.

### EXAMPLE 7

Preparation of a zinc solution containing both ammonium hydrogenocarbonate and glycinate, with molar ratio of 30 % of ammonium hydrogenocarbonate and 70 % of glycinate, and comprising 15% of dry ZnO with regard to the solution as is and, so 0.6 mol of carbonate and 1.4 mol of glycine per mole of zinc.

55.1 g of water are put under stirring, at ambient temperature. Subsequently, 20.2 g of glycine are added, followed by 15.6 g of zinc oxide (purity about 97%), followed by 9.1 g of ammonium hydrogenocarbonate. When the addition is complete, the pH of this suspension is adjusted to basic pH with ammonia and then the solution is heated at 70°C for 7 hours.

The solution is then cooled to 30°C.

100 g of a clear colourless solution are obtained.

### EXAMPLE 8

Preparation of a zinc solution containing both ammonium hydrogenocarbonate and glycinate, with molar ratio of 20 % of ammonium hydrogenocarbonate and 80 % of glycinate, and comprising 15% of dry ZnO with regard to the solution as is and, so 0.4 mol of carbonate and 1.6 mol of glycine per mole of zinc.

55.2 g of water are put under stirring, at ambient temperature. Subsequently, 23.1 g of glycine are added, followed by 15.6 g of zinc oxide (purity about 97%), followed by 6.1 g of ammonium hydrogenocarbonate. When the addition is complete, the pH of this suspension is adjusted to basic pH with ammonia and then the solution is heated at 70°C for 24 hours.

The solution is then cooled to 30°C.

100 g of a clear colourless solution are obtained.

### EXAMPLE 9

Preparation of a zinc solution containing both ammonium hydrogenocarbonate and glycinate, with molar ratio of 10 % of ammonium hydrogenocarbonate and 90 % of glycinate, and comprising 15 % of dry ZnO with regard to the solution as is and, so 0.2 mol of carbonate and 1.8 mol of glycine per mole of zinc.

55.4 g of water are put under stirring, at ambient temperature. Subsequently, 25.9 g of glycine are added, followed by 15.6 g of zinc oxide (purity about 97%), followed by 3.0 g of ammonium hydrogenocarbonate. When the addition is complete, the pH of this suspension is adjusted to basic pH with ammonia and then the solution is heated at 70°C for 3 hours.

The solution is then cooled to 30°C.

100 g of a clear colourless solution are obtained.

### EXAMPLE 10

Preparation of a zinc lactate carbonate solution, comprising 13.1 % of dry ZnO with regard to the solution as is and, so 1 mol of carbonate and 1 mol of lactate per mole of zinc.

58.7 g of water are put under stirring, at ambient temperature. Subsequently, 16.1 g of lactic acid at 90 % are added and the pH is adjusted to basic pH with ammonia. Then 13.1 g of zinc oxide (purity about 97 %) are added, followed by 12.1 g of ammonium hydrogenocarbonate. When the addition is complete, the solution is heated at 70°C for 5 hours.

The solution is then cooled to 30°C.

100 g of a clear solution are obtained.

### EXAMPLE 11

Preparation of a zinc lactate carbonate solution, comprising 15% of dry ZnO with regard to the solution as is and, so 0.6 mol of carbonate and 1.4 mol of lactate per mole of zinc.

55.9 g of water are put under stirring, at ambient temperature. Subsequently, 19.2 g of lactic acid at 90 % are added and the pH is adjusted to basic pH with ammonia. Then 15.6 g of zinc oxide (purity about 97 %) are added, followed by 9.3 g of ammonium hydrogenocarbonate. When the addition is complete, the solution is heated at 70°C for 24 hours.

The solution is then cooled to 30°C.

100 g of a clear solution are obtained.

### APPLICATION EXAMPLES

Use was made of a calcium carbonate sold by Omya (Hydrocarb^{®} 90), a kaolin sold by Huber Engineered Materials (Hydragloss^{®}), a styrene/butadiene latex sold by Dow (DL 950), and carboxymethylcellulose (CMC) sold by Noviant (Finfix^{®} 10).

Various formulations F0 to F14 were prepared, the compositions of which are given in Tables 1.1 and 1.2 below. The amounts are given as dry parts.

The formulation F0 does not comprise an insolubilizing agent.

The formulation F1 corresponds to the use of a commercial nanodispersion of zinc oxide (Comparative Example 1).

The formulation F2 corresponds to the use of a zinc dicarbonate composition (Comparative Example 2).

The formulation F3 corresponds to the use of a zinc diacetate composition (Comparative Example 3).

The formulation F4 corresponds to the use of a commercial zinc diglycinate (Comparative Example 4).

The formulation F5 corresponds to the use of a zinc, glycinate and carbonate composition, according to the invention, with molar ratio of 50 % of ammonium hydrogenocarbonate and 50 % of glycinate. (Example 5).

The formulation F6 corresponds to the use of a zinc, glycinate and carbonate composition, according to the invention, with molar ratio of 40 % of ammonium hydrogenocarbonate and 60 % of glycinate. (Example 6).

The formulation F7 corresponds to the use of a zinc, glycinate and carbonate composition, according to the invention, with molar ratio of 30 % of ammonium hydrogenocarbonate and 70 % of glycinate. (Example 7).

The formulation F8 corresponds to the use of a zinc, glycinate and carbonate composition, with molar ratio of 20 % of ammonium hydrogenocarbonate and 80 % of glycinate. (Example 8).

The formulation F9 corresponds to the use of a zinc, glycinate and carbonate composition, with molar ratio of 10 % of ammonium hydrogenocarbonate and 90 % of glycinate. (Example 9).

The formulation F10 corresponds to the use of a zinc, lactate and carbonate composition, with molar ratio of 50 % of ammonium hydrogenocarbonate and 50 % of lactic acid. (Example 10).

The formulation F11 corresponds to the use of a zinc, lactate and carbonate composition, with molar ratio of 30 % of ammonium hydrogenocarbonate and 70 % of lactic acid. (Example 9).

**TABLE 1.1 (= Comparative examples 1 to 4)**

| | F0 | F1 | F2 | F3 | F4 |
|---|---|---|---|---|---|
| calcium carbonate | 50 | 50 | 50 | 50 | 50 |
| kaolin | 50 | 50 | 50 | 50 | 50 |
| latex | 10 | 10 | 10 | 10 | 10 |
| CMC | 0.35 | 0.35 | 0.35 | 0.35 | 0.35 |
| insolubilizing agent | | 2 | | | |
| (Comparative Ex 1) | | | | | |
| insolubilizing agent (Comparative Ex 2) | | | 2 | | |
| insolubilizing agent (Comparative Ex 3) | | | | 2 | |
| insolubilizing agent (Comparative Ex 4) | | | | | 2 |
| pH | 8.7 | 8.7 | 8.7 | 8.75 | 8.7 |

**TABLE 1.2 (= Examples according to the invention)**

| | F5 | F6 | F7 | F8 | F9 | F10 | F11 |
|---|---|---|---|---|---|---|---|
| calcium carbonate | 50 | 50 | 50 | 50 | 50 | 50 | 50 |
| kaolin | 50 | 50 | 50 | 50 | 50 | 50 | 50 |
| latex | 10 | 10 | 10 | 10 | 10 | 10 | 10 |
| CMC | 0.35 | 0.35 | 0.35 | 0.35 | 0.35 | 0.35 | 0.35 |
| insolubilizing agent (Example 5) | 2 | | | | | | |
| insolubilizing agent (Example 6) | | 2 | | | | | |
| insolubilizing agent (Example 7) | | | 2 | | | | |
| insolubilizing agent (Example 8) | | | | 2 | | | |
| insolubilizing agent (Example 9) | | | | | 2 | | |
| insolubilizing agent (Example 10) | | | | | | 2 | |
| insolubilizing agent (Example 11) | | | | | | | 2 |
| pH | 8.7 | 8.7 | 8.7 | 8.7 | 8.7 | 8.7 | 8.7 |

The viscosity of each formulation was measured.

The viscosities were measured with a Brookfield viscometer, at a speed of 100 rpm, and are expressed in mPa.s. Viscosities must stay between 700 and maximum 1000 mPa.s. The results obtained are reported in Tables 2.1 and 2.2 below. When an important viscosity increase is observed, destabilization of the coating bath is also noted, showing the incompatibility of the insolubilizing agent with the coating bath.

**TABLE 2.1 (= Comparative examples 1 to 4)**

| | F0 | F1 | F2 | F3 | F4 |
|---|---|---|---|---|---|
| Bath viscosity (in mPa.s) | 769 | 645 | 3000 | 8000 | 857 |
| Destabilization | No | No | Yes | Yes | No |

The analysis of the results mentioned in Table 2.1 shows that, with respect to the coating slips prepared according to the techniques of the prior art, the composition F 2, using Zinc Dicarbonate (ZDC), the composition F 3, using Zinc Diacetate (ZDA), both used as comparative examples, give visual destabilisation of the bath, making it not usable for application. Zinc Dicarbonate (ZDC) and Zinc Diacetate (ZDA), both described in the state of art, are not usable.

**TABLE 2.2 (= Examples according to the invention)**

| | F0 | F5 | F6 | F7 | F8 | F9 | F10 | F11 |
|---|---|---|---|---|---|---|---|---|
| Bath viscosity (in mPa.s) | 769 | 754 | 756 | 780 | 724 | 756 | 800 | 1000 |
| Destabilization | No | No | No | No | No | No | No | No |

The analysis of the results mentioned in Table 2.2 shows that compositions according to the invention (examples 5 - 11) do not have the drawback to destabilize the bath and allow to obtain usable baths.

In the examples, use was made of uncoated paper exhibiting a grammage of 80 g/m².

The paper was coated with the formulations F 0, F 4 to F 11 with a deposition of approximately 20 g/m² using a threaded rod, followed by oven drying at 105°C in an oven for 2 minutes.

The Taber wet abrasion was subsequently determined on the coated paper.

The Taber wet abrasion was carried out according to amended French Standard Q 03-055, with annular test specimens with outer and inner diameters of 120 and 7 mm respectively, with 10 revolutions, CS O wheels, under a pressure of 1N, in the presence of 10 ml of water, followed by rinsing with 10 ml of water; these 20 ml of water are collected and made up to 25 ml with water and then the turbidity of these 25 ml of water is determined with a Hach turbidimeter. The turbidity found is expressed in NTU units (the lower the turbidity values, the better the wet abrasion resistance of the coating) and the results obtained are reported in Table 3 below.

**TABLE 3 Turbidity values**

| | F0 | F1 | F4 | F5 | F6 | F7 | F8 | F9 | F10 | F11 |
|---|---|---|---|---|---|---|---|---|---|---|
| Turbidity (in NTU) | 218 | 152 | 218 | 37 | 40 | 50 | 54 | 107 | 28 | 29 |

The analysis of the results mentioned in table 3 shows, that with respect to the coating slips prepared according to the prior art (comparative formulation F4, using ZDG cannot provide a coating having a sufficient wet abrasion resistance.

The formulations F5 - F11 according to the present invention, however, provide coatings having an improved wet abrasion resistance.

Other advantages of the composition according to the present invention are a very rapid preparation and only a very slight smell of ammonia.

## Claims

1. Aqueous composition comprising a complex comprising at least one polyvalent metal, wherein the at least one polyvalent metal is complexed by at least one carbonate ligand and at least one carboxylic acid ligand,
**characterized in that**
the at least one carbonate ligand is selected from sodium hydrogenocarbonate, ammonium carbonate, ammonium hydrogenocarbonate, potassium hydrogenocarbonate, and combinations or mixtures thereof
and
the at least one carboxylic acid ligand is selected from glycolic acid, lactic acid, glycine, and combinations or mixtures thereof.

2. Composition according to claim 1, wherein the at least one polyvalent metal is selected from transition metals and main group metals, preferably wherein the at least one polyvalent metal is zinc or aluminum.

3. Composition according to claim 1 or 2, wherein the source of the at least one polyvalent metal is selected from the corresponding metal carbonate, metal chloride, metal oxide, metal sulphate, and combinations or mixtures thereof, preferably selected from zinc carbonate, zinc chloride (ZnCl₂), zinc oxide, zinc sulphate, aluminium oxide, aluminum sulphate, aluminum chloride (AlCl₃) and combinations or mixtures thereof.

4. Composition according to any one of the preceding claims, wherein the molar ratio between the at least one carbonate ligand and the at least one carboxylic acid ligand is at least about 10 molar %, preferably at least about 20 molar %, even more preferably at least about 30 molar %, and up to about 65 molar %, preferably up to about 60 molar %, even more preferably up to about 50 molar %, most preferably between about 30 and about 50 molar % of carbonate ligand; and at least about 35 molar %, preferably at least about 40 molar %, even more preferably at least about 50 molar %, and up to about 90 molar %, preferably up to about 80 molar %, and most preferably up to about 70 molar %, most preferably between about 50 and about 70 molar % of carboxylic acid ligand,
wherein the amount of carboxylic acid ligand and carbonate ligand is in total 100 molar %.

5. Composition according to any one of the preceding claims, wherein the source of the at least one polyvalent metal is selected from zinc oxide, zinc carbonate, and combinations or mixtures thereof; and
the source of the at least one carbonate ligand is selected from potassium hydrogencarbonate, ammonium hydrogencarbonate, and combinations or mixtures thereof; and
the source of the at least one carboxylic acid ligand is selected from glycolic acid, lactic acid, glycine, and combinations or mixtures thereof.

6. Composition according to any one of the preceding claims, wherein the pH value of the composition is alkaline, preferably more than 7, or more than about 8, or more than about 9, and less than about 10.

7. Composition according to any one of the preceding claims, wherein the concentration of Zn ions, expressed as ZnO, is in the range of from about 3 to about 20% by weight.

8. Composition according to any one of the preceding claims, wherein the composition further comprises at least one additive, preferably selected from the group consisting of stabilizing agents.

9. Method of manufacturing of the composition according to any of the preceding claims comprising the admixing of at least one salt of a polyvalent metal with at least one carbonate salt and at least one carboxylic acid
**characterized in that**
the at least one carbonate salt is selected from sodium hydrogenocarbonate, ammonium carbonate, ammonium hydrogenocarbonate, potassium hydrogenocarbonate, and combinations or mixtures thereof
and
the at least one carboxylic acid is selected from glycolic acid, lactic acid, glycine, and combinations or mixtures thereof.

10. Method of coating a fiber-based substrate, e.g. a cellulose-based substrate, such as a paper, board, non woven or textile substrate, comprising the step of contacting said substrate with the composition of any of claims 1 to 8.

11. Use of the composition according to any of the claims 1 to 8, as an insolubilizing agent in an aqueous composition for the treatment, e.g.- impregnation or coating, of a fiber-based substrate, e.g. a cellulose-based substrate, such as paper, board, non woven or textile material.

12. Pigmented coating bath comprising the composition according to any of claims 1 to 8.

## Patentansprüche

1. Wässrige Zusammensetzung, aufweisend einen Komplex, der mindestens ein mehrwertiges Metall aufweist, wobei das mindestens eine mehrwertige Metall durch mindestens einen Carbonatliganden und mindestens einen Carbonsäureliganden komplexiert ist,
**dadurch gekennzeichnet, dass**
der mindestens eine Carbonatligand ausgewählt ist aus Natriumhydrogencarbonat, Ammoniumcarbonat, Ammoniumhydrogencarbonat, Kaliumhydrogencarbonat und Kombinationen oder Mischungen davon ausgewählt ist
und
der mindestens eine Carbonsäureligand ausgewählt ist aus Glycolsäure, Milchsäure, Glycin und Kombinationen oder Mischungen davon ausgewählt ist.

2. Zusammensetzung nach Anspruch 1, wobei das mindestens eine mehrwertige Metall aus Übergangsmetallen und Hauptgruppenmetallen ausgewählt ist, wobei vorzugsweise das mindestens eine mehrwertige Metall Zink oder Aluminium ist.

3. Zusammensetzung nach Anspruch 1 oder 2, wobei die Herkunft des mindestens einen mehrwertigen Metalls ausgewählt ist aus dem entsprechenden Metallcarbonat, Metallchlorid, Metalloxid, Metallsulfat und Kombinationen oder Mischungen davon, vorzugsweise ausgewählt ist aus Zinkcarbonat, Zinkchlorid (ZnCl₂), Zinkoxid, Zinksulfat, Aluminiumoxid, Aluminiumsulfat, Aluminiumchlorid (AlCl₃) und Kombinationen oder Gemischen davon.

4. Zusammensetzung nach einem der vorhergehenden Ansprüche, wobei das Molverhältnis zwischen dem mindestens einen Carbonatliganden und dem mindestens einen Carbonsäureliganden mindestens etwa 10 Mol-%, vorzugsweise mindestens etwa 20 Mol-%, noch stärker bevorzugt mindestens etwa 30 Mol-% und bis zu etwa 65 Mol-%, vorzugsweise bis zu etwa 60 Mol-%, noch mehr bevorzugt bis zu etwa 50 Mol-%, am meisten bevorzugt zwischen etwa 30 und etwa 50 Mol-% des Carbonatliganden beträgt; und mindestens etwa 35 Mol-%, vorzugsweise mindestens etwa 40 Mol-%, noch mehr bevorzugt mindestens etwa 50 Mol-% und bis zu etwa 90 Mol-%, vorzugsweise bis zu etwa 80 Mol-% und am meisten bevorzugt bis zu etwa 70 Mol-%, am meisten bevorzugt zwischen etwa 50 und etwa 70 Mol-% des Carbonsäureliganden beträgt,
wobei die Menge an Carbonsäureligand und Carbonatligand insgesamt 100 Mol-% beträgt.

5. Zusammensetzung nach einem der vorhergehenden Ansprüche, wobei die Herkunft des mindestens einen mehrwertigen Metalls ausgewählt ist aus Zinkoxid, Zinkcarbonat und Kombinationen oder Mischungen davon; und
die Herkunft des mindestens einen Carbonatliganden ausgewählt ist aus Kaliumhydrogencarbonat, Ammoniumhydrogencarbonat und Kombinationen oder Mischungen davon; und
die Herkunft des mindestens einen Carbonsäureliganden ausgewählt ist aus Glycolsäure, Milchsäure, Glycin und Kombinationen oder Mischungen davon ausgewählt ist.

6. Zusammensetzung nach einem der vorhergehenden Ansprüche, wobei der pH-Wert der Zusammensetzung alkalisch, vorzugsweise mehr als 7 oder mehr als etwa 8 oder mehr als etwa 9 und weniger als etwa 10 ist.

7. Zusammensetzung nach einem der vorhergehenden Ansprüche, wobei die Konzentration von Zn-Ionen, in Form von ZnO, im Bereich von etwa 3 bis etwa 20 Gew.-% liegt.

8. Zusammensetzung nach einem der vorhergehenden Ansprüche, wobei die Zusammensetzung ferner mindestens ein Additiv aufweist, vorzugsweise ausgewählt aus der Gruppe bestehend aus Stabilisierungsmitteln.

9. Verfahren zur Herstellung der Zusammensetzung nach einem der vorhergehenden Ansprüche, aufweisend das Mischen von mindestens einem Salz eines mehrwertigen Metalls mit mindestens einem Carbonatsalz und mindestens einer Carbonsäure
**dadurch gekennzeichnet, dass**
das mindestens eine Carbonatsalz ausgewählt ist aus Natriumhydrogencarbonat, Ammoniumcarbonat, Ammoniumhydrogencarbonat, Kaliumhydrogencarbonat und Kombinationen oder Mischungen davon
und
die mindestens eine Carbonsäure ausgewählt ist aus Glykolsäure, Milchsäure, Glycin und Kombinationen oder Mischungen davon.

10. Verfahren zum Beschichten eines faserbasierten Substrats, z.B. ein Substrat auf Cellulosebasis, wie etwa ein Papier-, Karton-, Vlies- oder Textilsubstrat, aufweisend den Schritt des Inkontaktbringens des Substrats mit der Zusammensetzung nach einem der Ansprüche 1 bis 8.

11. Verwendung der Zusammensetzung nach einem der Ansprüche 1 bis 8 als Insolubilisierungsmittel (Insolubilizing agent) in einer wässrigen Zusammensetzung zur Behandlung, z.B. Imprägnierung oder Beschichtung eines faserbasierten Substrats, z.B. ein auf Zellulose basierendes Substrat, wie etwa Papier, Karton, Vlies oder Textilmaterial.

12. Pigmentiertes Beschichtungsbad, aufweisend die Zusammensetzung nach einem der Ansprüche 1 bis 8.

## Revendications

1. Composition aqueuse comprenant un complexe comprenant au moins un métal plurivalent, où le au moins un métal plurivalent est complexé par au moins un ligand carbonate et au moins un ligand acide carboxylique,
**caractérisée en ce que**
le au moins un ligand carbonate est choisi parmi l'hydrogénocarbonate de sodium, le carbonate d'ammonium, l'hydrogénocarbonate d'ammonium, l'hydrogénocarbonate de potassium, et les combinaisons ou mélanges de ceux-ci
et
le au moins un ligand acide carboxylique est choisi parmi l'acide glycolique, l'acide lactique, la glycine, et les combinaisons ou mélanges de ceux-ci.

2. Composition selon la revendication 1, où le au moins un métal plurivalent est choisi parmi les métaux de transition et les métaux des groupes principaux, de manière préférable où le au moins un métal plurivalent est le zinc ou l'aluminium.

3. Composition selon la revendication 1 ou 2, où la source du au moins un métal plurivalent est choisie parmi le carbonate métallique, le chlorure métallique, l'oxyde métallique, le sulfate métallique correspondant, et les combinaisons ou mélanges de ceux-ci, de manière préférable choisie parmi le carbonate de zinc, le chlorure de zinc (ZnCl₂), l'oxyde de zinc, le sulfate de zinc, l'oxyde d'aluminium, le sulfate d'aluminium, le chlorure d'aluminium (AlCl₃) et les combinaisons ou mélanges de ceux-ci.

4. Composition selon l'une quelconque des revendications précédentes, où le rapport molaire entre le au moins un ligand carbonate et le au moins un ligand acide carboxylique est au moins environ 10 % molaire, de manière préférable au moins environ 20 % molaire, de manière préférable encore au moins environ 30 % molaire, et jusqu'à environ 65 % molaire, de manière préférable jusqu'à environ 60 % molaire, de manière préférable encore jusqu'à environ 50 % molaire, de manière particulièrement préférable entre environ 30 et environ 50 % molaire de ligand carbonate; et au moins environ 35 % molaire, de manière préférable au moins environ 40 % molaire, de manière préférable encore au moins environ 50 % molaire, et jusqu'à environ 90 % molaire, de manière préférable jusqu'à environ 80 % molaire, et de manière particulièrement préférable jusqu'à environ 70 % molaire, de manière particulièrement préférable entre environ 50 et environ 70 % molaire de ligand acide carboxylique,
où la quantité de ligand acide carboxylique et de ligand carbonate est au total 100 % molaire.

5. Composition selon l'une quelconque des revendications précédentes, où la source du au moins un métal plurivalent est choisie parmi l'oxyde de zinc, le carbonate de zinc, et les combinaisons ou mélanges de ceux-ci; et
la source du au moins un ligand carbonate est choisie parmi l'hydrogénocarbonate de potassium, l'hydrogénocarbonate d'ammonium, et les combinaisons ou mélanges de ceux-ci; et
la source du au moins un ligand acide carboxylique est choisie parmi l'acide glycolique, l'acide lactique, la glycine, et les combinaisons ou mélanges de ceux-ci.

6. Composition selon l'une quelconque des revendications précédentes, où le pH de la composition est alcalin, de manière préférable de plus de 7, ou de plus d'environ 8, ou de plus d'environ 9, et de moins d'environ 10.

7. Composition selon l'une quelconque des revendications précédentes, où la concentration des ions Zn, exprimée en ZnO, est dans la plage d'environ 3 à environ 20% en poids.

8. Composition selon l'une quelconque des revendications précédentes, où la composition comprend en outre au moins un additif, de manière préférable choisi dans le groupe consistant en les agents stabilisants.

9. Procédé de fabrication de la composition selon l'une quelconque des revendications précédentes comprenant le mélange d'au moins un sel d'un métal plurivalent avec au moins un sel carbonate et au moins un acide carboxylique
**caractérisé en ce que**
le au moins un sel carbonate est choisi parmi l'hydrogénocarbonate de sodium, le carbonate d'ammonium, l'hydrogénocarbonate d'ammonium, l'hydrogénocarbonate de potassium, et les combinaisons ou mélanges de ceux-ci
et
le au moins un acide carboxylique est choisi parmi l'acide glycolique, l'acide lactique, la glycine, et les combinaisons ou mélanges de ceux-ci.

10. Procédé de revêtement d'un substrat à base de fibres, par exemple un substrat à base de cellulose, comme un substrat de papier, de carton, non tissé ou textile, comprenant l'étape de mise en contact dudit substrat avec la composition de l'une quelconque des revendications 1 à 8.

11. Utilisation de la composition selon l'une quelconque des revendications 1 à 8 comme agent insolubilisant dans une composition aqueuse pour le traitement, par exemple l'imprégnation ou le revêtement, d'un substrat à base de fibres, par exemple un substrat à base de cellulose, comme une matière de papier, de carton, non tissée ou textile.

12. Bain de revêtement pigmenté comprenant la composition selon l'une quelconque des revendications 1 à 8.
